# FASCICULE DE BREVET EUROPEEN

(11) **EP 2 773 995 B1**
(45) Date de publication et mention de la délivrance du brevet: **21.07.2021**
(21) Numéro de dépôt: 12783975.1
(22) Date de dépôt: 05.11.2012
(51) Int. Cl.: G02B 27/01, G06F 3/14, G06F 3/02, G06F 21/36, G02B 27/02

(54) **DISPOSITIF DE VISUALISATION D'UNE IMAGE NUMERIQUE**
VORRICHTUNG ZUM BETRACHTEN EINES DIGITALEN BILDES
DEVICE FOR VIEWING A DIGITAL IMAGE

(30) Priorité: 04.11.2011 FR 1160001
(43) Date de publication de la demande: 10.09.2014
(73) Titulaire: SORBONNE UNIVERSITE, 75006 Paris (FR); Assistance Publique Hôpitaux De Paris, 75004 Paris (FR)
(72) Inventeur: LE NAOUR, Gilles, F-94360 Bry sur Marne (FR); DE TRAZEGNIES D'ITTRE, François, F-94800 Villejuif (FR); CAPRON, Frédérique, F-75014 Paris (FR)
(74) Mandataire: Decorchemont, Audrey Véronique Christèle
(86) Numéro de dépôt international: PCT/EP2012/071860
(87) Numéro de publication internationale: WO 2013/064697

(56) Documents cités:
- EP-A1- 1 715 682
- EP-A2- 0 935 183
- WO-A1-2004/049038
- WO-A2-2005/098508
- US-B1- 6 396 941
- US-B1- 6 525 878

## Description

L'invention concerne un dispositif de visualisation d'une image numérique et notamment d'une lame virtuelle dans le but d'aider un utilisateur à analyser et étudier une telle image numérique.

### ARRIERE PLAN TECHNOLOGIQUE DE L'INVENTION

L'histologie est une science de la médecine et de la biologie consacrée à l'étude de la structure de tissus humains, animaux ou végétaux. Usuellement, le tissu à étudier est prélevé, traité par des techniques physico-chimiques puis coupé avec un microtome afin d'obtenir une coupe d'environ 2 micromètres d'épaisseur qui est déposée sur une lame de verre. Les constituants spécifiques au tissu sont révélés sur cette coupe à l'aide de colorants ou de marqueurs immunologiques. Enfin, on vient recouvrir ladite coupe par une deuxième lamelle de verre. L'ensemble forme alors une lame physique en verre, dite « lame réelle », qui est ensuite traditionnellement observée au microscope optique.

Depuis quelques années, il est également possible de scanner une lame réelle grâce à un scanner de lame dédié. La lame réelle est alors numérisée à très haute résolution sous la forme d'un fichier image informatique de très haute définition. Un tel fichier image est couramment appelé « lame virtuelle ».

Une telle lame virtuelle est donc directement observable sur un écran d'ordinateur, un utilisateur pouvant réaliser un déplacement virtuel de la lame virtuelle et également zoomer sur une portion souhaitée de la lame virtuelle. Une lame virtuelle permet une étude aussi précise qu'une étude au microscope optique de la lame réelle correspondante.

Les lames virtuelles présentent de nombreux avantages par rapport aux lames réelles, notamment dans un cadre médical et scientifique.

En effet, lorsqu'un médecin observe une lame réelle et qu'il n'arrive pas à établir un diagnostic d'une éventuelle pathologie, il doit transmettre une autre lame créée à partir du tissu à étudier à un confrère expert par voie postale pour que ledit confrère étudie à son tour la lame réelle. Cette lame réelle étant très fragile, elle peut se trouver endommagée durant sa transmission, ce qui empêche son étude. En outre, la nouvelle lame réelle ne possède pas la même coupe que la lame initiale de sorte que le confrère expert n'étudie pas la même coupe que le médecin demandeur de l'expertise. De la même façon, si le médecin est obligé de créer une nouvelle lame à partir du tissu à étudier pour effectuer une relecture médicale obligatoire, la nouvelle lame ne sera pas identique à la première. La différence entre les deux lames peut introduire une divergence ou une erreur sur le diagnostic et le pronostic.

La particularité de la lame virtuelle est d'être unique et de pouvoir être stockée sur un support informatique. Il est donc possible de mettre la lame virtuelle en ligne sur un serveur ce qui la rend très facile d'accès. Un médecin peut donc étudier la lame virtuelle à distance ainsi que différents médecins peuvent observer la même lame virtuelle en même temps, en étant localisés à des endroits géographiquement éloignés.

Par ailleurs, la lame virtuelle est un fichier image de sorte qu'elle reste inchangée dans le temps.

Par leur facilité et leur rapidité d'accès via un serveur, une banque d'images ..., les lames virtuelles facilitent donc grandement l'élaboration d'un diagnostic et d'un pronostic de maladie sur un tissu étudié.

L'utilisation des lames virtuelles et leur examen s'appliquent ainsi à l'étude de tous les tissus biologiques humains et animaux mais également à l'étude des tissus végétaux ... L'utilisation de lames virtuelles est particulièrement utile pour la télémédecine et notamment la télépathologie qui exige l'étude d'un tissu histologique et donc la transmission très fidèle de la texture et de la couleur dudit tissu. La télépathologie est un champ spécialisé de la télémédecine qui consiste en la pratique de l'étude anatomopathologique à distance, entre deux ou plusieurs centres éloignés, de lames virtuelles. L'objectif est de produire un diagnostic ou d'obtenir un deuxième avis médical. Outre le diagnostic à distance, la télépathologie trouve également une utilité dans les lames virtuelles pour l'enseignement, la téléformation et la recherche scientifique.

Toutefois, le médecin observe la lame virtuelle sur un écran d'ordinateur. Or il a été observé que la visualisation d'une lame virtuelle sur un tel écran, quelle que soit sa taille et sa résolution, ne permettait pas au médecin de se concentrer facilement pour pratiquer une étude anatomopathologique.

Le document US 6 525 878 divulgue un dispositif de visualisation permettant à plusieurs opérateurs de visualiser un même élément, chaque opérateur pouvant visualiser une image avec une perspective appropriée pour sa position / orientation.

Le document WO 2004049038 divulgue un dispositif de visualisation comprenant une extrémité proximale et une extrémité distale, pouvant être posé sur une table (voir Fig.4).

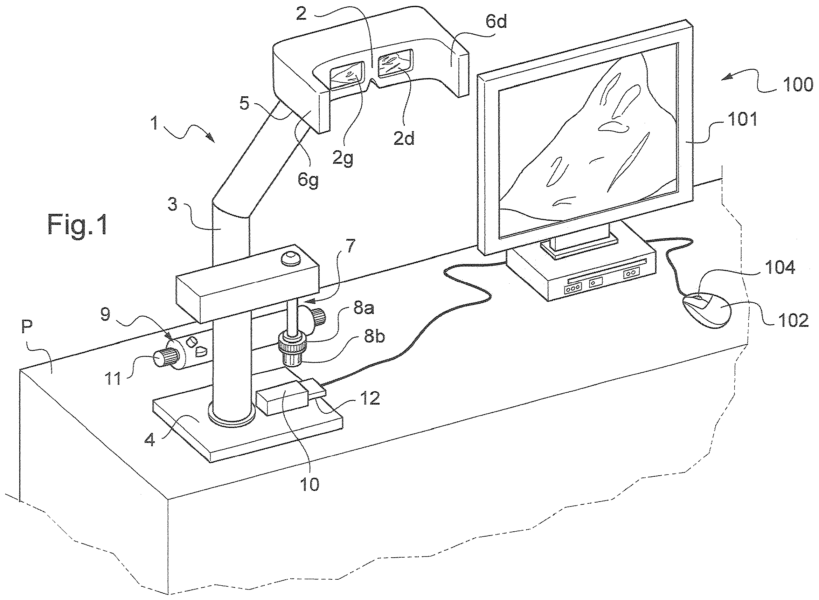

Le document EP 1 715682 divulgue un dispositif de visualisation d'une image numérique, monté sur un pied destiné à être posé sur le sol (voir Fig.1). OBJET DE L'INVENTION

Un but de l'invention est de proposer un dispositif de visualisation d'une image numérique comme une lame virtuelle qui permette à un utilisateur de se concentrer aisément sur l'étude de ladite image numérique.

### BREVE DESCRIPTION DE L'INVENTION

En vue de la réalisation de ce but, on propose un dispositif de visualisation d'une image numérique, par exemple une lame virtuelle, comportant des moyens de visualisation d'au moins une partie de l'image numérique.

Selon l'invention, les moyens de visualisation comprennent un masque de visualisation tenu par un support de sorte que le masque de visualisation soit en service à hauteur des yeux d'un utilisateur pour que celui-ci puisse approcher ses yeux du masque de visualisation pour examiner la partie de l'image numérique visualisée, le support comportant une extrémité proximale formant une base qui est destinée à être posée sur une table et une extrémité distale conformée pour tenir le masque de visualisation, le masque de visualisation comportant des extensions latérales pour isoler l'utilisateur de perturbations visuelles externes, et en ce que le dispositif de visualisation comprend en outre au moins un organe de manipulation de déplacement opérable par l'utilisateur pour commander un déplacement virtuel de l'image numérique de façon que l'utilisateur puisse visualiser une autre partie de l'image numérique.

L'utilisateur n'observe donc l'image numérique qu'à travers le masque de visualisation ce qui réduit son champ de vision et facilite sa concentration.

L'utilisateur analyse ainsi plus efficacement et plus rapidement une lame virtuelle que lorsqu'il regarde ladite lame virtuelle sur un écran d'ordinateur.

Les inventeurs ont pu constater que le fait d'approcher ses yeux très près du masque de visualisation facilite la concentration de l'utilisateur par l'élimination visuelle de toute pollution lumineuse au point que mêmes certaines perturbations sonores externes deviennent moins perturbantes.

En outre, les inventeurs ont également pu constater que le dispositif de visualisation selon l'invention s'avère très ergonomique pour un médecin car le dispositif de visualisation se rapproche d'un microscope optique par la visualisation de la lame virtuelle uniquement à travers le masque de visualisation dédié, assimilable aux oculaires d'un microscope optique, et également aux moyens de déplacement de la lame virtuelle qui sont commandés manuellement, comme sur un microscope optique.

### BREVE DESCRIPTION DES DESSINS

L'invention sera mieux comprise à la lumière de la description qui suit d'un mode de réalisation particulier non limitatif de l'invention en référence aux figures ci-jointes parmi lesquelles :
- la figure 1 est une vue en perspective schématique d'un dispositif de visualisation selon un premier mode de réalisation de l'invention;
- la figure 2 est une vue en perspective schématique d'un dispositif de visualisation selon un deuxième mode de réalisation de l'invention.

### DESCRIPTION DETAILLEE DE L'INVENTION

En référence à la figure 1, le dispositif de visualisation 1 selon l'invention est ici disposé sur un pupitre P. Le dispositif de visualisation 1 permet ici la visualisation d'une lame virtuelle que l'utilisateur travaille dans la biologie humaine, animale, la biologie végétale ou toute autre discipline qui a recourt à la microscopie et de ce fait à l'étude de lames virtuelles.

Le dispositif de visualisation 1 comporte des moyens de visualisation d'au moins une partie d'une lame virtuelle.

Les moyens de visualisation comportent ainsi un masque de visualisation 2. Le dispositif de visualisation 1 comporte en outre un support 3 dont une extrémité proximale forme une base 4 reposant sur le pupitre P. Une extrémité distale 5 du support 3 est conformée pour tenir le masque de visualisation 2 de sorte que le masque de visualisation 2 soit à hauteur des yeux d'un utilisateur lorsqu'en service l'utilisateur approche ses yeux du masque de visualisation 2.

Ici le support 3 comporte une unité de commande 10 qui comprend un port de connexion 12. Le dispositif de visualisation 1 comporte ici un ordinateur 100 à proximité duquel le support 3 est disposé, l'unité de commande 10 étant relié à l'ordinateur 100 par l'intermédiaire de son port de connexion 12. Ainsi, un utilisateur peut récupérer grâce à l'ordinateur 100 une lame virtuelle à étudier sur un serveur, une base de données ..., l'utilisateur pouvant étudier ladite lame virtuelle à travers le masque de visualisation 2. De façon avantageuse, l'utilisateur peut également visualiser au moins une partie de la lame virtuelle sur un écran 101 de l'ordinateur 100.

Le masque de visualisation 2 comporte ici deux écrans numériques 2d, 2g sur lesquels la lame virtuelle est visualisable. Selon l'invention, lorsqu'un utilisateur approche ses yeux du masque de visualisation 2, chaque œil étant associé à un des écrans numériques 2d, 2g, il peut visualiser une portion de la lame virtuelle. L'utilisateur n'observe ainsi la lame virtuelle qu'à travers le masque de visualisation 2 ce qui réduit son champ de vision.

Le masque de visualisation 2 est configuré pour isoler autant que possible l'utilisateur de perturbations visuelles externes. A cet effet, le masque de visualisation 2 comporte des extensions latérales 6g, 6d conformées de sorte que lorsque l'utilisateur approche ses yeux du masque de visualisation 2, les branches 6g, 6d s'étendent le long de chaque côté du visage de l'utilisateur. Les branches 6g, 6d réduisent ainsi davantage un champ de vision externe de l'utilisateur ce qui facilite la concentration de l'utilisateur.

Lorsque l'utilisateur approche ses yeux du masque de visualisation 2 pour examiner la partie de la lame virtuelle visualisée, il est ainsi isolé de perturbations visuelles externes. Il est donc plus facile à l'utilisateur de se concentrer sur la visualisation de la lame virtuelle, et donc sur l'étude et l'analyse de ladite lame virtuelle, que s'il se contentait de regarder l'écran 101 de l'ordinateur 100, l'utilisateur pouvant alors être gêné par des reflets sur l'écran 101 de l'ordinateur 100, par un environnement de l'écran 101...

Le masque de visualisation est par exemple un masque de type visiocasque.

Selon l'invention, le dispositif de visualisation 1 comporte un premier organe de manipulation de déplacement 7 opérable par l'utilisateur pour commander un déplacement virtuel de la lame virtuelle de sorte que l'utilisateur puisse visualiser une autre partie de la lame virtuelle. Selon un mode de réalisation privilégié, le premier organe de manipulation de déplacement 7 est opérable de sorte que toute la lame virtuelle puisse être visualisée par l'utilisateur par visualisations successives de parties de la lame virtuelle.

Le premier organe de manipulation de déplacement 7 est ici agencé sur le support 3 et comporte une première molette 8a et une deuxième molette 8b, les deux molettes 8a, 8b étant coaxiales et respectivement opérables pour commander un déplacement virtuel de la lame virtuelle selon deux directions distinctes. De préférence, les molettes 8a, 8b du premier organe de manipulation de déplacement 7 sont reliés à l'unité de commande 10 de sorte que lorsque l'utilisateur tourne la première molette 8a, la partie de la lame virtuelle visualisée est déplacée proportionnellement selon une direction horizontale et lorsque l'utilisateur tourne la deuxième molette 8b, la partie de la lame virtuelle visualisée est déplacée proportionnellement selon une direction verticale.

De façon privilégiée, le premier organe de manipulation de déplacement 7 est agencé sur le support 3 de sorte que les deux molettes 8a, 8b soit orientées d'un côté ou de l'autre du support 3 selon que l'utilisateur régulier du dispositif de visualisation 1 soit droitier ou gaucher.

Selon un mode de réalisation privilégié, le dispositif de visualisation 1 comporte un deuxième organe de manipulation de déplacement opérable par l'utilisateur pour commander un déplacement virtuel de la lame virtuelle de sorte que l'utilisateur puisse visualiser une autre partie de la lame virtuelle. Le deuxième organe de manipulation de déplacement comprend ici une souris 102 connectée à l'ordinateur 100. L'utilisateur peut ainsi agir simultanément sur la partie de la lame virtuelle qu'il observe sur l'écran 101 et sur la partie de la lame virtuelle qu'il observe par le masque de visualisation 2, un déplacement de la souris 102 entraînant un déplacement proportionnel de la lame virtuelle.

De préférence, le dispositif de visualisation 1 comporte en outre un premier organe de manipulation de zoom 9 opérable par l'utilisateur pour commander un zoom virtuel de la lame virtuelle de sorte que l'utilisateur puisse observer plus en détail une portion de la partie de la lame virtuelle visualisée. L'organe de manipulation de zoom 9 est ici agencé sur le support 3 et comporte une molette crantée 11 qui est reliée à l'unité de commande 10 de sorte que lorsque l'utilisateur tourne la molette crantée 11, cela provoque un grossissement proportionnel d'une portion de la partie de la lame virtuelle visualisée.

De préférence, lorsque l'organe de manipulation de zoom 9 est dans sa position minimum, la lame virtuelle entière est observable à travers le masque de visualisation 2.

Selon un mode de réalisation privilégié, le dispositif de visualisation 1 comporte un deuxième organe de manipulation de zoom opérable par l'utilisateur pour commander un zoom virtuel de la lame virtuelle de sorte que l'utilisateur puisse observer plus en détail une portion de la partie de la lame virtuelle visualisée. Le deuxième organe de manipulation de zoom comprend ici une roulette 104 montée sur la souris 102. L'utilisateur peut ainsi agir simultanément sur la partie de la lame virtuelle qu'il observe sur l'écran 101 et sur la partie de la lame virtuelle qu'il observe par le masque de visualisation 2, un déplacement de la roulette 104 de la souris 102 entraînant un grossissement proportionnel de la lame virtuelle.

Un utilisateur peut ainsi utiliser le dispositif de visualisation 1 de façon très intuitive. Il peut en outre ici choisir avec quel organe de manipulation de déplacement 7, 102 et quel organe de manipulation de zoom 9, 104, il souhaite agir sur la lame virtuelle.

De façon privilégié, l'ensemble formé principalement par le support 3 et le masque de visualisation 2 est conformé pour présenter la forme générale d'un microscope optique. Ainsi, le support 3 est ici conformé pour présenter la forme générale d'une potence de microscope optique.

Selon un mode de réalisation privilégié, les deux molettes 8a, 8b du premier organe de manipulation de déplacement 7 sont disposées sur le support 3 de sorte à être sensiblement disposées comme un organe de manipulation de déplacement d'une platine d'un microscope optique standard. On rappelle qu'un tel organe de manipulation de microscope optique comporte deux mollettes coaxiales, une molette commandant le déplacement de la platine selon une direction horizontale et l'autre commandant le déplacement de la platine selon une direction verticale.

De préférence, la molette crantée 11 du premier organe de manipulation de zoom 9 est disposée sur le support 3 de sorte à être sensiblement disposée comme une vis de mise de mise au point d'un microscope optique standard, par exemple une vis macrométrique ou micrométrique.

Ainsi, grâce à la forme adaptée du support 3, le premier organe de manipulation de déplacement 7, le premier organe de manipulation de zoom 9 rendent l'utilisation du dispositif de visualisation 1 s'avère encore plus intuitive pour un utilisateur. De façon avantageuse, l'utilisateur peut ainsi facilement passer de l'observation sur un microscope optique d'une lame réelle de l'art antérieur à l'observation sur le dispositif de visualisation 1 d'une lame virtuelle.

En outre, le dispositif de visualisation 1 selon l'invention présente des avantages comparativement à un microscope optique. Par exemple, le masque de visualisation 2 offre un bien plus grand confort que les oculaires d'un microscope optique tout en remplissant la fonction de réduction du champ de vision de l'utilisateur comme les oculaires d'un microscope optique.

Le dispositif de visualisation selon l'invention peut être également désigné sous le nom de microscope numérique puisque ledit dispositif restitue une image entièrement numérique provenant d'un support informatique comme un ordinateur permettant ainsi la visualisation d'une image numérique. Ceci n'est en aucun cas assimilable à un microscope optique classique qui nécessite d'être connecté à une caméra ou à un appareil photographique pour étudier en temps réel les images prises par ladite caméra ou ledit appareil. Le dispositif de l'invention ne comporte ni caméra ni appareil photographique et est seulement raccordé de façon filaire ou sans fil à un support informatique comportant des images numériques.

Bien entendu l'invention n'est pas limitée au mode de réalisation décrit et on peut y apporter des variantes de réalisation sans sortir du cadre de l'invention tel que défini par les revendications.

En particulier, bien qu'ici le dispositif de l'invention permette la visualisation d'une lame virtuelle, le dispositif de l'invention pourra être destiné à la visualisation d'autres images numériques notamment à caractère scientifique et/ou médical.

En particulier, bien qu'ici le support 3 soit relié à l'ordinateur 100 qui comporte un écran 101 sur lequel il est également possible de visualiser l'image numérique, le support 3 pourra être disposé dans un tout autre environnement. Par exemple, le support 3 pourra être relié à un ordinateur 100 sans être disposé directement à proximité de l'écran 101 de l'ordinateur 100. Il est cependant avantageux de conserver le support 3 et ledit écran 101 à proximité l'un de l'autre. En effet, l'utilisateur dispose ainsi de deux moyens de visualisation de l'image numérique à étudier.

Le dispositif de visualisation 1 pourra ne pas comporter d'écran d'ordinateur 101. Le support sera alors simplement relié à un ordinateur connecté à un réseau sur lequel des images numériques sont disponibles. Le support pourra être relié de façon filaire ou sans fil à un ordinateur, un réseau informatique, une tablette tactile, un téléphone de type Smartphone, une clé USB ou tout autre support informatique. Lorsque le support comporte des moyens de communications sans fil, par exemple par wifi ou Bluetooth, il est ainsi possible plus compact et plus autonome. Le dispositif de visualisation est alors transportable plus facilement d'un point à un autre. Le support pourra également être connecté à un appareil (comme une tablette tactile ou un téléphone de type Smartphone) pourvu lui-même de moyens de communication sans fil avec un réseau informatique.

Bien qu'ici l'unité de commande 10 comporte un unique port de connexion, l'unité de commande 10 pourra comporter un plus grand nombre de ports de connexion pour, par exemple, connecter l'unité de commande à la fois à un ordinateur 100 et à une clé USB.

Le dispositif de visualisation selon l'invention pourra comporter des moyens de mémorisation par exemple pour permettre :
- l'enregistrement d'une zone particulière sélectionnée par l'utilisateur de l'image numérique;
- l'enregistrement de commentaires tapés ou dictés par l'utilisateur afin de les relier à l'image numérique étudiée par l'utilisateur.

Les moyens de mémorisation pourront par exemple être portés par le support. Le dispositif de visualisation pourra comporter des moyens d'enregistrement vocal (microphone relié à un système de reconnaissance vocale par exemple) afin d'enregistrer les commentaires dictés par l'utilisateur ou encore comprendre un clavier pour enregistrer les commentaires tapés par l'utilisateur. De façon avantageuse, avec des moyens de reconnaissance vocale, l'utilisateur peut uniquement se concentrer sur la visualisation de l'image numérique sans détourner son regard pour produire ses commentaires.

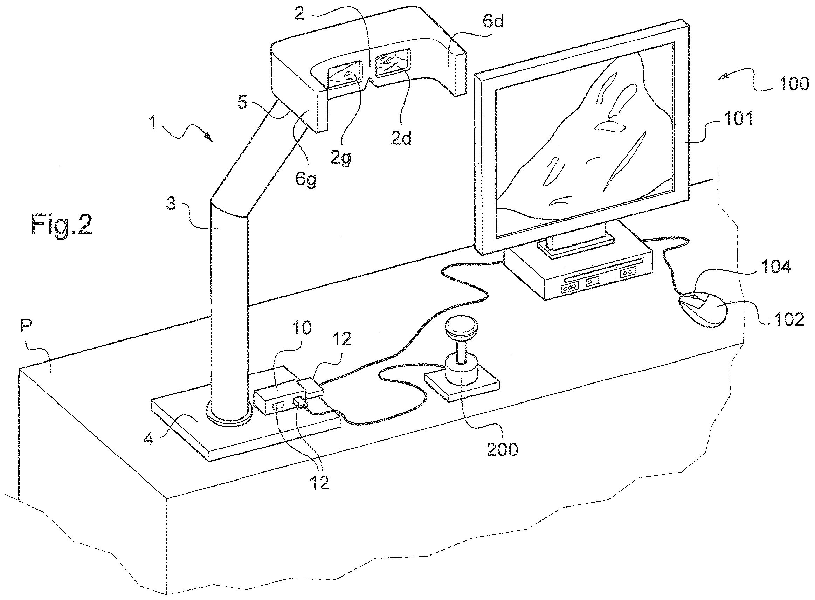

En outre, le dispositif de visualisation 1 peut comporter un nombre d'organes de manipulations différents de celui illustré et des organes de manipulations différents de ceux illustrés à condition que le dispositif de visualisation 1 comporte au moins un organe de manipulation de déplacement opérable par l'utilisateur pour commander un déplacement virtuel de l'image numérique. En référence à la figure 2, selon un mode de réalisation particulier, le dispositif de visualisation 1 comporte un organe de manipulation de déplacement opérable par l'utilisateur pour commander un déplacement virtuel de l'image numérique de sorte que l'utilisateur puisse observer une autre partie de l'image numérique, ledit organe comportant un joystick 200. Le joystick 200 est par exemple connecté à l'organe de traitement 10 par liaison filaire grâce à l'un des ports de connexion 12 du dispositif de visualisation 1. Selon une variante, à un dispositif de visualisation 1 selon le premier mode de réalisation, l'utilisateur connecte en outre un joystick 200 à l'unité de commande 10. L'utilisateur pourra ainsi choisir avec quel organe de manipulation de déplacement il préfère réaliser un déplacement virtuel de l'image numérique.

En variante, l'organe de manipulation ou l'un des organes de manipulation pourront être un écran tactile comme une tablette tactile ou encore un téléphone de type Smartphone : l'image numérique pourra ainsi être déplacée et/ ou grossie virtuellement directement à partir dudit écran tactile.

On privilégiera toutefois un dispositif de travail 1 où au moins un organe de manipulation est monté directement sur le support 3 du dispositif de visualisation 1 ce qui rend le dispositif de visualisation 1 bien plus compact et plus proche de la forme d'un microscope optique.

Bien qu'ici le dispositif de visualisation 1 comporte un organe de manipulation de déplacement pour déplacer virtuellement l'image numérique et un organe de manipulation de zoom pour effectuer virtuellement des grossissements de l'image numérique, on pourra envisager que les organes de manipulation permettent d'effectuer d'autres opérations virtuelles sur l'image numérique. Par exemple, si une lame réelle est scannée sur plusieurs plans focaux, le dispositif de visualisation 1 pourra comporter un organe de manipulation de plans focaux opérable par l'utilisateur pour commander un déplacement virtuel de l'image numérique associée d'un plan focal à l'autre.

Seule une partie de l'image numérique pourra être visualisable grâce au dispositif de visualisation 1.

Le dispositif de visualisation 1 pourra prendre une autre forme que celle illustrée. Par exemple, bien qu'ici le support 3 du masque de visualisation 2 soit indéformable, le support 3 pourra être conformé pour qu'un utilisateur puisse adapter la hauteur du support 3 afin que le masque de visualisation 2 soit à une hauteur qui le satisfait. Le support 3 pourra par exemple être conformé en un bras déformable. Dans tous les cas, le support comportera une extrémité proximale formant une base destinée à être posée et une extrémité distale conformée pour tenir le masque de visualisation de sorte que l'utilisateur n'aura pas à porter le dispositif de visualisation. Le dispositif de visualisation de l'invention est ainsi totalement indépendant d'un utilisateur.

Bien qu'ici le support 3 se contente de tenir le masque de visualisation 2, le support 3 pourra en outre contribuer à isoler l'utilisateur de perturbations visuelles externes en encadrant le masque de visualisation 2, par exemple pour entourer le front de l'utilisateur lorsque celui-ci regarde l'image numérique par le masque de visualisation 2 avec comme avantage de laisser une totale autonomie à l'utilisateur.

## Revendications

1. Dispositif de visualisation d'une image numérique dans le but d'aider un utilisateur à analyser et étudier une telle image numérique, par exemple une lame virtuelle, comportant des moyens de visualisation (2) d'au moins une partie de l'image numérique, **caractérisé en ce que** les moyens de visualisation comprennent un masque de visualisation (2) tenu par un support (3) de sorte que le masque de visualisation soit en service à hauteur des yeux d'un utilisateur pour que celui-ci puisse approcher ses yeux du masque de visualisation pour examiner la partie l'image numérique visualisée, le support comportant une extrémité proximale formant une base (4) qui est destinée à être posée sur une table et une extrémité distale (5) conformée pour tenir le masque de visualisation, le masque de visualisation comportant des extensions latérales (6g, 6d) pour isoler l'utilisateur de perturbations visuelles externes, et **en ce que** le dispositif de visualisation comprend en outre au moins un organe de manipulation de déplacement (7, 102, 200) opérable par l'utilisateur pour commander un déplacement virtuel de l'image numérique de façon que l'utilisateur puisse visualiser une autre partie de l'image numérique.

2. Dispositif de visualisation selon la revendication 1, dans lequel le masque de visualisation (2) est un masque de visiocasque.

3. Dispositif de visualisation selon la revendication 1, dans lequel l'organe de manipulation de déplacement (7) comporte deux molettes coaxiales (8a, 8b) respectivement opérables pour commander un déplacement virtuel l'image numérique selon deux directions distinctes.

4. Dispositif de visualisation selon la revendication 1, dans lequel l'organe de manipulation de déplacement comprend un joystick (200).

5. Dispositif de visualisation selon la revendication 1, dans lequel l'organe de manipulation de déplacement comprend une souris (102).

6. Dispositif de visualisation selon la revendication 1 comportant en outre au moins un organe de manipulation de zoom (9, 104) opérable par l'utilisateur pour commander un zoom virtuel de l'image numérique.

7. Dispositif de visualisation selon la revendication 6, comprenant un premier organe de manipulation de zoom et un deuxième organe de manipulation de zoom.

8. Dispositif de visualisation selon la revendication 7, dans lequel le premier organe de manipulation comporte une molette crantée (11) provoquant un grossissement proportionnel et le deuxième organe de manipulation comporte une roulette (104) montée sur une souris (102) entrainant un grossissement proportionnel.

9. Dispositif de visualisation selon la revendication 1, dans lequel le support (3) est conformé pour présenter la forme générale d'une potence de microscope optique.

10. Dispositif de visualisation selon la revendication 3, dans lequel les deux molettes (8a, 8b) de l'organe de manipulation de déplacement sont disposées sur le support (3) de sorte à être sensiblement disposés comme un organe de manipulation de déplacement d'une platine d'un microscope optique.

11. Dispositif de visualisation selon la revendication 10, dans lequel la molette crantée (11) de l'organe de manipulation de zoom est disposée sur le support (3) de sorte à être sensiblement disposée comme une vis de mise au point d'un microscope optique.

12. Dispositif selon l'une des revendications précédentes, dans lequel le support (3) encadre le masque de visualisation (2) pour entourer, en service, le front de l'utilisateur.

13. Dispositif selon l'une des revendications précédentes, comportant de plus des moyens d'enregistrement vocal afin d'enregistrer des commentaires dictés par l'utilisateur afin de les relier à l'image numérique étudiée par l'utilisateur.

14. Dispositif de visualisation selon l'une quelconque des revendications précédentes, comportant en outre un ordinateur grâce auquel l'image virtuelle est récupérée à partir d'une base de données stockée dans un serveur.

15. Dispositif de visualisation selon l'une quelconque des revendications précédentes, comportant en outre un ordinateur grâce auquel l'utilisateur peut visualiser en service également au moins une partie de la lame virtuelle.

## Patentansprüche

1. Visualisierungsvorrichtung zur Visualisierung eines digitalen Bildes mit dem Ziel einem Benutzer zu helfen, ein solches digitales Bild, beispielsweise einen virtuellen Objektträger, zu analysieren und zu studieren, umfassend Visualisierungsmittel (2) zur Visualisierung mindestens eines Teils des digitalen Bildes, **dadurch gekennzeichnet, dass** die Visualisierungsmittel eine Visualisierungsbrille (2) umfassen, die von einem Träger (3) derart gehalten wird, dass die Visualisierungsbrille im Betrieb auf Höhe der Augen eines Benutzers ist, damit dieser seine Augen an die Visualisierungsbrille annähern kann, um den Teil des visualisierten digitalen Bildes zu untersuchen, wobei der Träger ein proximales Ende umfasst, das eine Basis (4) bildet, die dazu bestimmt ist, auf einen Tisch gestellt zu werden, sowie ein distales Ende (5), das angepasst ist, um die Visualisierungsbrille zu halten, wobei die Visualisierungsbrille seitliche Verlängerungen (6g, 6d) umfasst, um den Benutzer von äußeren visuellen Störungen zu isolieren, und dass die Visualisierungsvorrichtung ferner mindestens ein Verschiebungs-Betätigungselement (7, 102, 200) umfasst, das von dem Benutzer betätigbar ist, um eine virtuelle Verschiebung des digitalen Bildes so zu steuern, dass der Benutzer einen anderen Teil des digitalen Bildes visualisieren kann.

2. Visualisierungsvorrichtung nach Anspruch 1, bei der die Visualisierungsbrille (2) eine Head-Mounted-Display-Brille ist.

3. Visualisierungsvorrichtung nach Anspruch 1, bei der das Verschiebungs-Betätigungselement (7) zwei koaxiale Einstellräder (8a, 8b) umfasst, die jeweils betätigbar sind, um eine virtuelle Verschiebung des digitalen Bildes in zwei unterschiedliche Richtungen zu steuern.

4. Visualisierungsvorrichtung nach Anspruch 1, bei der das Verschiebungs-Betätigungselement einen Joystick (200) umfasst.

5. Visualisierungsvorrichtung nach Anspruch 1, bei der das Verschiebungs-Betätigungselement eine Maus (102) umfasst.

6. Visualisierungsvorrichtung nach Anspruch 1, ferner umfassend mindestens ein Zoom-Betätigungselement (9, 104), das von dem Benutzer betätigbar ist, um ein virtuelles Zoomen des digitalen Bildes zu steuern.

7. Visualisierungsvorrichtung nach Anspruch 6, umfassend ein erstes Zoom-Betätigungselement und ein zweites Zoom-Betätigungselement.

8. Visualisierungsvorrichtung nach Anspruch 7, bei dem das erste Betätigungselement ein gerändeltes Einstellrad (11) umfasst, das eine proportionale Vergrößerung bewirkt, und das zweite Betätigungselement ein Rädchen (104) umfasst, das auf einer Maus (102) montiert ist und eine proportionale Vergrößerung bewirkt.

9. Visualisierungsvorrichtung nach Anspruch 1, bei der der Träger (3) angepasst ist, um die allgemeine Form eines Ständers eines optischen Mikroskops aufzuweisen.

10. Visualisierungsvorrichtung nach Anspruch 3, bei der die beiden Einstellräder (8a, 8b) des Verschiebungs-Betätigungselements an dem Träger (3) derart angeordnet sind, dass sie im Wesentlichen wie ein Verschiebungs-Betätigungselement eines Objekttisches eines optischen Mikroskops angeordnet sind.

11. Visualisierungsvorrichtung nach Anspruch 10, bei der das gerändelte Einstellrad (11) des Zoom-Betätigungselements an dem Träger (3) derart angeordnet ist, dass es im Wesentlichen wie eine Fokussierschraube eines optischen Mikroskops angeordnet ist.

12. Visualisierungsvorrichtung nach einem der vorhergehenden Ansprüche, bei der der Träger (3) die Visualisierungsbrille (2) einrahmt, um im Betrieb die Stirn des Nutzers zu umschließen.

13. Visualisierungsvorrichtung nach einem der vorhergehenden Ansprüche, ferner umfassend Sprachaufzeichnungsmittel, um von dem Benutzer diktierte Kommentare aufzunehmen, um sie mit dem von dem Benutzer studierten digitalen Bild zu verknüpfen.

14. Visualisierungsvorrichtung nach einem der vorhergehenden Ansprüche, ferner umfassend einen Rechner, mit dem das virtuelle Bild anhand einer in einem Server gespeicherten Datenbank wiederhergestellt wird.

15. Visualisierungsvorrichtung nach einem der vorhergehenden Ansprüche, ferner umfassend einen Rechner, mit dem der Benutzer im Betrieb ebenso mindestens einen Teil des virtuellen Objektträgers visualisieren kann.

## Claims

1. A viewing device for viewing a digital image for the purpose of helping a user to analyze and study such a digital image, for example a virtual slide, including viewing means (2) for viewing at least one part of the digital image, **characterized in that** the viewing means comprise a viewing mask (2) held by a support (3) in such a way that the viewing mask is in operation at the level of the observer's eyes, so that the observer can move his eyes toward the viewing mask to examine the part of the digital image being viewed, the support having a proximal end forming a base (4) intended to be set down on a table and a distal end (5) configured to hold the viewing mask, the viewing mask having lateral extensions (6g, 6d) to isolate the user from external visual disturbances, and **in that** the viewing mask further comprises at least one movement control member (7, 102, 200) operable by the user to cause a virtual movement of the digital image so that the user can view another part of the digital image.

2. The viewing device as claimed in claim 1, wherein the viewing mask (2) is a head mounted display mask.

3. The viewing device as claimed in claim 1, wherein the movement control member (7) includes two coaxial thumbwheels (8a, 8b) which can be operated, respectively, to cause a virtual movement of the digital image in two different directions.

4. The viewing device as claimed in claim 1, wherein the movement control member comprises a joystick (200).

5. The viewing device as claimed in claim 1, wherein the movement control member comprises a mouse (102).

6. The viewing device as claimed in claim 1, further comprising at least one zoom control member (9, 104) operable by the user to produce a virtual zoom of the digital image.

7. The viewing device as claimed in claim 6, comprising a first zoom control member and a second zoom control member.

8. The viewing device as claimed in claim 7, wherein the first zoom control member comprises a knurled thumbwheel (11) which causes a proportional enlargement and the second zoom control member comprises a rolling wheel (104) mounted on a mouse (102) resulting in a proportional enlargement.

9. The viewing device as claimed in claim 1, wherein the support (3) is configured so as to take the general form of an optical microscope stand.

10. The viewing device as claimed in claim 3, wherein the two thumbwheels (8a, 8b) of the movement control member are positioned on the support (3) so as to be substantially positioned in the same way as a movement control member of a carrier of an optical microscope.

11. The viewing device as claimed in claim 10, wherein the knurled thumbwheel (11) of the zoom control member (9) is positioned on the support (3) so as to be substantially positioned in the same way as a focusing screw of an optical microscope.

12. The viewing device as claimed in any previous claim, wherein the support (3) framing the viewing mask (2) so as to surround the user's forehead.

13. The viewing device as claimed in any previous claim, comprising voice recording means for the purpose of recording notes dictated by the user in order to link them to the digital image studied by the user.

14. The viewing device as claimed in any previous claim, further comprising a computer according to which the digital image is retrieved from a database based on a server.

15. The viewing device as claimed in any previous claim, further comprising a computer according to which the user could visualize in service at least one part of the digital image.
